# EUROPEAN PATENT SPECIFICATION

(11) **EP 0 725 128 B1**
(45) Date of publication and mention of the grant of the patent: **15.03.2000**
(21) Application number: 96850001.7
(22) Date of filing: 02.01.1996
(51) Int. Cl.: C10L 9/10, C10L 5/44, C10L 10/00

(54) **A solid biofuel additive**
Additiv für festen Biobrennstoff
Additif pour biocombustible solide

(30) Priority: 23.01.1995 SE 9500212
(43) Date of publication of application: 07.08.1996
(73) Proprietor: Bycosin Aktiebolag, S-651 14 Karlstad (SE)
(72) Inventor: Östlund, Jonas, S-681 38 Krisrinehamn (SE); Östlund, Lennart, S-616 90 Aby (SE); Richards, Geoffrey A., S-446 33 Älvängen (SE)
(74) Representative: Hynell, Magnus

(56) References cited:
- EP-A- 0 032 811
- DE-A- 2 436 364
- DE-A- 3 806 869
- FR-A- 2 554 458
- GB-A- 1 585 684
- US-A- 3 431 093

## Description

### TECHNICAL FIELD

The present invention relates to a solid biofuel additive.

### BACKGROUND OF THE INVENTION

Burning of solid biofuels is beset with a number of problems. For reasons of a handling and combustion-technical nature, solid fuels are often compressed to form pellets, briquettes or the like, particularly when the fuels are in a finely-divided state, such as wood chips, sawdust and certain types of bio-waste.

Compression of the fuel often requires the addition of a binder, so that the compressed product will remain intact after compression. The binder used may also require the presence of or the addition of water, which reduces the calorific value of the fuel, among other things. The manufacture of pellets from sawdust involves, among other things, the use of lignin compounds which require the presence of water in order to provide a satisfactory binding effect, therewith increasing the moisture content of the sawdust. Many additives, such as those proposed in accordance with U.S. Patent No. 3,240,573, have an environmentally suspect origin and produce doubtful degradation products, since they constitute rest products from mineral oil and coal-refining processes, such as tar, asphalt products and synthetic waxes, for instance. According to U.S. Patent No. 3,240,573, polymer binders, such as formaldehyde-based binders, are also used. U.S. Patent No. 4,357,145 describes a method of manufacturing briquettes from powdered coal, in which, prior to briquetting, fuel and binder are first mixed in a complicated mixing process, to form an aqueous slurry.

When firing boilers continuously on an industrial scale, a high boiler efficiency and long operating times between consecutive boiler shutdowns for cleaning purposes are of fundamental significance. When firing with oil and solid fuels, the fuel additives may be used to modify fuel ignition temperature and combustion temperature for instance, so as to reduce the occurrence of surface coatings and their negative effects and therewith improve efficiency and reduce dust emissions. These additive substances are often metal compounds that are undesirable from an environmental aspect, such as lead, tin, zinc, barium, copper or manganese.

### DISCLOSURE OF THE INVENTION

An object of the invention is to provide a solid biofuel additive which is both active as a binder that has lubricating properties when compressing solid biofuels and which will improve boiler efficiency and reduce dust emissions, probably by virtue of a catalyzing effect. The additive substance will also preferably function to reduce the extent of deposits on the heat-transfer surfaces of the boiler. According to the invention, the additive substance will often have a calorific value which is as high as or higher than the calorific value of the fuel and will preferably reduce or essentially eliminate other of the aforesaid deficiencies of those additive substances used at present.

These and other objects of the invention are achieved with a substance that has the characteristic features set forth in the following Claim 1.

By solid biofuels is meant in accordance with the invention combustible, non-fossil substances, essentially substances which derive from the plant and animal kingdoms and which are not gaseous or liquid at temperatures beneath +100°C. Examples of such solid biofuels are wood in different forms, forest waste, grass, bark and other forest by-products and rest products, straw and other agricultural by-products and rest products, wastepaper, garbage, peat, etc., and also mixtures of these and other products. The biofuel may also include other substances, preferably combustible substances, which are present in larger or smaller amounts and which may derive from the mineral kingdom, for instance plastic material. On the other hand, the term biofuels does not include those which are comprised substantially of fossil fuels or are otherwise derived from the mineral kingdom, such as coal, coke, brown coal and oil-shale.

The inventive additive substance includes metal-organic compounds, such as metal carboxylates. Metals from the groups alkaline earth metals, rare earth metals and the iron group (group 8 in the periodic system) can be used.

When used as an additive in the compression of solid biofuels in accordance with the present invention, the binding and lubricating properties of these carboxylates and fatty acids are combined with the polymerizing or "drying" properties of unsaturated and/or multi-unsaturated carboxyl and fatty acid groups as well as unsatored and/or multi-unsaturated carboxyland fatty acids to hold together the compacted solid fuel, at the same time as the metals of the carboxylates improve combustion in the boiler and boiler operation. Resin acid is also used in the present invention.

The carboxylates used in the present invention are carboxylates that have 7 to 22 carbon atoms, preferably 10 to 20 carbon atoms and suitably 18 to 20 carbon atoms. These carboxylates may be saturated or single-unsaturated or multi-unsaturated. The metals of the carboxylates are one or more of the metals from the group alkaline earth metals, rare earth elements and the iron group (group 8 in the periodic system). Lanthanides are an example of particularly preferred metals (elements) from the group rare earth elements. The additive contains preferably 100-200 g/litre of the aforesaid metals. The relationships between the metals is preferably 10-30% magnesium, 40-80% calcium and 10-30% iron.

The metals are intended to enhance combustion and improve boiler operation, for instance by modifying the combustion temperature, modifying the smelt temperature of boiler coatings, and reducing dust emissions.

Although mineral oils can be used as a solvent for the carboxylates and as a means for lowering the viscosity of the additive substance, it is preferred to use esters which occur naturally or esters with naturally occurring fatty acids, such as sunflower oil, soya oil and rape oil and mixtures thereof. Rape (oil) methyl ester (RME) is particularly preferred.

The above metal carboxylates and the solvent are then admixed with fatty acids and/or resin acids. The fatty acids used are saturated and/or unsaturated fatty acids which preferably have 10 to 22 carbon atoms. The resin acids used are preferably those that have 15 to 22 carbon atoms.

In one preferred embodiment, the additive substance is comprised of carboxylates that contain magnesium, calcium and iron, and a solvent, such as rape methyl ester (RME) in a mixture of fatty acids and resin acids, such as crude tall oil. By crude tall oil is meant in this case the undistilled acid-treated and heat-treated crude soap obtained in sulphate mills. If desired, the additive substance may be supplemented with other additive substances that improve combustion in accordance with known techniques, such as oxidizing substances, for instance nitrates, nitrites, manganates, permanganates and other metal-organic cyclic and/or polycyclic compounds.

The additive substance is prepared by mixing the metal carboxylates with the solvent and then mining the resultant mixture with a solution containing essentially fatty acids and resin acids, at a temperature of between 30 and 60°C.

The additive substance is suitably added in its liquid state to the solid biofuel, by applying said substance to the solid biofuel either prior to and/or in a mixture prior to compressing the biofuel, e.g. by spraying. The additive substance is metered to the solid biofuel so that the ratio of metal carboxylates to the solid biofuel (calculated on a bone dry basis) will be between 1:500 and 1:100,000, preferably between 1:1,000 and 1:8,000, suitably between 1:1,500 and 1:4,000.

The use of the inventive additive substance has given very positive results, both with regard to compaction of the solid biofuel to pellet form and with regard to burning of the fuel. For instance, the compressor capacity has been increased, the moisture content of the solid biofuel has decreased and the density of the compressed fuel has increased, which together provides a compressed solid biofuel of higher calorific value which can be transported more easily and at lower transport costs than biofuels produced in accordance with earlier known techniques. Furthermore, the use of the inventive additive substance enables the solid biofuel to be admixed with other materials that could not earlier be admixed with the fuel while still obtaining a coherent compressed product. With regard to burning of the solid biofuel in a boiler, the solid biofuel has been found to produce less soot, less coatings on the heat-transfer surfaces of the boiler, less dust emissions and a more neutral ash at the same air/fuel ratios. Further tests have also shown an improved efficiency, calculated on the heat generated with each kg of solid biofuel delivered, and greater power in comparison with solid biofuel that has been pelletized in accordance with known techniques.

Further characteristic features and aspects of the invention and advantages afforded thereby will be apparent from the following Claims and from the following description of a conceivable embodiment of the invention.

### DETAILED DESCRIPTION OF AN EMBODIMENT OF THE INVENTION

In one preferred embodiment of the invention, the additive substance contains the metals magnesium, calcium and iron. The relationships between the metals is 20% magnesium, 60% calcium and 20% iron.

A first component i) of the additive substance is comprised of a known fuel additive, such as Bycosin DP91 004 from BYCOSIN AB, Box 627, S-65114, Karlstad, Sweden, this component constituting 5% of the additive substance.

A second component ii) of the additive substance is comprised of rape methyl ester, this component constituting 5% of the additive substance.

A third component iii) of the additive substance is comprised of crude tall oil, this component constituting 90% of the additive substance.

In the preferred embodiment, the additive substance is prepared by mixing the metal carboxylates with rape methyl ester and thereafter mixing the resultant solution with the crude tall oil. The tall oil is heated to 50°C at normal air pressure. The mixture of metal carboxylates and rape methyl ester is then added while vigorously agitating the mix.

When pelletizing sawdust to pellets having a diameter of about 10 mm and a length of about 20 mm, 1.4% of the additive substance, calculated on the weight of the sawdust, was sprayed onto the sawdust in a mixing chamber prior to compressing the sawdust to pellet form. In comparison with earlier known techniques using lignin compounds as a binder, the pellets had a much lower moisture content, 4.5% instead of 9.5%, owing to the fact that there was no need to add water in order to "activate" the binder. The relative density of the pellets also increased from about 650 g/litre to about 690 g/litre. These property improvements alone result in a higher calorific value and improved transport economy with regard to transportation of the pellets from the pelletizing plant to the combustion plant.

## Claims

1. A solid biofuel additive substance, **characterized** in that it contains:
i) Metal carboxylates having one or more metals from the groups alkaline earth metals, rare earth elements and the iron group (group 8 in the periodic system),
ii) Fatty acid esters, and
iii) Fatty acids and/or resin acids.

2. A substance according to Claim 1, **characterized** in that the carboxylic groups in the metal carboxylates have 7 to 22 carbon atoms.

3. A substance according to Claim 2, **characterized** in that the carboxylic groups of the metal carboxylates are saturated and/or unsaturated, branched and/or non-branched, chain-wise and/or cyclically mono and/or polycarboxylic.

4. A substance according to any one of the preceding Claims, **characterized** in that the total metal carboxylate content is 1 to 20%, preferably 2 to 10% and suitably 4 to 8%, calculated on the additive substance.

5. A substance according to any one of the preceding Claims, **characterized** in that the total metal content of the metal carboxylates in the additive substance is between 50 and 300 g/l, preferably between 100 and 200 g/l and suitably between 130 and 150 g/l, calculated on the additive substance.

6. A substance according to any one of the preceding Claims, **characterized** in that the metals in the metal carboxylates from the group alkaline earth metals are magnesium and/or calcium.

7. A substance according to any one of the preceding Claims, **characterized** in that the metals in the metal carboxylates from the group rare earth metals are lanthanides.

8. A substance according to any one of the preceding Claims, **characterized** in that the metals in the metal carboxylates from the iron group (group 8 in the periodic system) are iron.

9. A substance according to any one of the preceding Claims, **characterized** in that the relationships between the metals magnesium, calcium and iron are 5 to 40% magnesium, 30 to 90% calcium and 5 to 40% iron, preferably 10 to 30% magnesium, 40 to 80% calcium and 10 to 30% iron, and suitably 15 to 25% magnesium, 50 to 70% calcium and 15 to 25% iron.

10. A substance according to Claim 1, **characterized** in that the fatty acid esters are esters of naturally occurring fatty acids having 7 to 25 carbon atoms.

11. A substance according to Claim 1, **characterized** in that the fatty acid esters are glycerides.

12. A substance according to Claim 1, **characterized** in that the fatty acid esters are methyl esters.

13. A substance according to Claim 1, **characterized** in that the fatty acid esters are rape (oil) methyl esters (RME).

14. A substance according to Claim 1, **characterized** in that the total content of fatty acid esters is 2 to 10%, preferably 3 to 8% and suitably 4 to 6%, calculated on the additive substance.

15. A substance according to Claim 1, **characterized** in that the fatty acids included in the substance in the form of said fatty acids and/or resin acids are unsaturated and/or saturated fatty acids having 7 to 25 carbon atoms in an amount of 10 to 95%, preferably 20 to 80% and suitably 30 to 70%, calculated on the additive substance.

16. A substance according to Claim 1, **characterized** in that the fatty acids are fatty acids having 15 to 22 carbon atoms in an amount of 5 to 75%, preferably 10 to 60% and suitably 15 to 50%.

17. A substance according to Claim 1, **characterized** in that said fatty acids and/or resin acids consist of crude tall oil.

18. A substance according to Claim 15, **characterized** in that the crude tall oil content is between 30 and 95%, preferably between 50 and 95%, and suitably 70 to 90%, calculated on the additive substance.

## Patentansprüche

1. Additiv für festen Biobrennstoff, dadurch gekennzeichnet, daß das Additiv
i) Metallcarboxylate mit einem oder mehreren Metallen aus den Gruppen Erdalkalimetalle, Seltenerdmetalle und der Eisengruppe (8. Gruppe des Periodensystems),
ii) Fettsäureester und
iii) Fettsäuren und/oder Harzsäuren
enthält.

2. Additiv gemäß Anspruch 1, dadurch gekennzeichnet, daß die Carboxylgruppen in den Metallcarboxylaten 7 bis 22 Kohlenstoffatome aufweisen.

3. Additiv gemäß Anspruch 2, dadurch gekennzeichnet, daß die Carboxylgruppen in den Metallcarboxylaten gesättigt und/oder ungesättigt, verzweigt und/oder nicht verzweigt, kettenförmig und/oder ringförmig, mono- und/oder polycarbonsauer sind.

4. Additiv gemäß einem der vorhergehenden Ansprüche, dadurch gekennzeichnet, daß der Metallcarboxylatanteil insgesamt 1 bis 20%, vorzugsweise 2 bis 10% und geeigneterweise 4 bis 8%, berechnet auf das Additiv, beträgt.

5. Additiv gemäß einem der vorhergehenden Ansprüche, dadurch gekennzeichnet, daß der Metallgehalt der Metallcarboxylate in dem Additiv insgesamt zwischen 50 und 300 g/l, vorzugsweise zwischen 100 und 200 g/l und geeigneterweise zwischen 130 und 150 g/l, berechnet auf das Additiv, beträgt.

6. Additiv gemäß einem der vorhergehenden Ansprüche, dadurch gekennzeichnet, daß es sich bei den Metallen in den Metallcarboxylaten aus der Erdalkalimetall-Gruppe um Magnesium und/oder Calcium handelt.

7. Additiv gemäß einem der vorhergehenden Ansprüche, dadurch gekennzeichnet, daß es sich bei den Metallen in den Metallcarboxylaten aus der Seltenerdmetall-Gruppe um Lanthanide handelt.

8. Additiv gemäß einem der vorhergehenden Ansprüche, dadurch gekennzeichnet, daß es sich bei den Metallen in den Metallcarboxylaten aus der Eisen-Gruppe (8. Gruppe des Periodensystems) um Eisen handelt.

9. Additiv gemäß einem der vorhergehenden Ansprüche, dadurch gekennzeichnet, daß die Verhältnisse zwischen den Metallen Magnesium, Calcium und Eisen 5 bis 40% Magnesium, 30 bis 90% Calcium und 5 bis 40% Eisen, vorzugsweise 10 bis 30% Magnesium, 40 bis 80% Calcium und 10 bis 30% Eisen und geeigneterweise 15 bis 25% Magnesium, 50 bis 70% Calcium und 15 bis 25% Eisen betragen.

10. Additiv gemäß Anspruch 1, dadurch gekennzeichnet, daß die Fettsäureester Ester natürlich vorkommender Fettsäuren mit 7 bis 25 Kohlenstoffatomen sind.

11. Additiv gemäß Anspruch 1, dadurch gekennzeichnet, daß die Fettsäureester Glyceride sind.

12. Additiv gemäß Anspruch 1, dadurch gekennzeichnet, daß die Fettsäureester Methylester sind.

13. Additiv gemäß Anspruch 1, dadurch gekennzeichnet, daß die Fettsäureester Raps(öl)methylester (RME) sind.

14. Additiv gemäß Anspruch 1, dadurch gekennzeichnet, daß der Fettsäureestergehalt insgesamt 2 bis 10%, vorzugsweise 3 bis 8% und geeigneterweise 4 bis 6%, berechnet auf das Additiv, beträgt.

15. Additiv gemäß Anspruch 1, dadurch gekennzeichnet, daß die in dem Additiv in Form von Fettsäuren und/oder Harzsäuren enthaltenen Fettsäuren ungesättigte und/oder gesättigte Fettsäuren mit 7 bis 25 Kohlenstoffatomen in einer Menge von 10 bis 95%, vorzugsweise 20 bis 80% und geeigneterweise 30 bis 70%, berechnet auf das Additiv, sind.

16. Additiv gemäß Anspruch 1, dadurch gekennzeichnet, daß die Fettsäuren solche mit 15 bis 22 Kohlenstoffatomen und in einer Menge von 5 bis 75%, vorzugsweise 10 bis 60% und geeigneterweise 15 bis 50% sind.

17. Additiv gemäß Anspruch 1, dadurch gekennzeichnet, daß die Fettsäuren und/oder Harzsäuren aus Rohtallöl bestehen.

18. Additiv gemäß Anspruch 15, dadurch gekennzeichnet, daß der Rohtallölgehalt zwischen 30 und 95%, vorzugsweise zwischen 50 und 95% und geeigneterweise zwischen 70 und 90%, berechnet auf das Additiv, beträgt.

## Revendications

1. Substance additive solide pour biocarburant, caractérisée en ce qu'elle contient :
i) Des carboxylates de métal ayant un ou plusieurs métaux parmi les groupes des métaux alcalino-terreux, des éléments des terres rares et le groupe du fer (groupe 8 dans la classification périodique), et
ii) Des esters d'acides gras,
iii) Des acides gras et/ou des acides de résine.

2. Substance selon la revendication 1, caractérisée en ce que les groupements carboxyliques des carboxylates de métal ont 7 à 22 atomes de carbone.

3. Substance selon la revendication 2, caractérisée en ce que les groupements carboxyliques des carboxylates de métal sont saturés et/ou insaturés, ramifiés et/ou non ramifiés, en chaîne et/ou monocycliques et/ou polycarboxyliques.

4. Substance selon l'une quelconque des revendications précédentes, caractérisée en ce que la teneur totale en carboxylate de métal est de 1 à 20%, de préférence de 2 à 10% et idéalement de 4 à 8%, calculée par rapport à la substance additive.

5. Substance selon l'une quelconque des revendications précédentes, caractérisée en ce que la teneur totale en métal des carboxylates de métal de la substance additive se situe entre 50 et 300 g/l, de préférence entre 100 et 200 g/l et idéalement entre 130 et 150 g/l, calculée par rapport à la substance additive.

6. Substance selon l'une quelconque des revendications précédentes, caractérisée en ce que les métaux dans les carboxylates de métal du groupe des métaux alcalino-terreux sont le magnésium et/ou le calcium.

7. Substance selon l'une quelconque des revendications précédentes, caractérisée en ce que les métaux dans les carboxylates de métal du groupe des métaux des terres rares sont des lanthanides.

8. Substance selon l'une quelconque des revendications précédentes, caractérisée en ce que les métaux dans les carboxylates de métal du groupe du fer (groupe 8 dans la classification périodique) sont du fer.

9. Substance selon l'une quelconque des revendications précédentes, caractérisée en ce que les relations entre les métaux magnésium, calcium et fer sont 5 à 40% de magnésium, 30 à 90% de calcium et 5 à 40% de fer, de préférence 10 à 30% de magnésium, 40 à 80% de calcium et 10 à 30% de fer et idéalement 15 à 25% de magnésium, 50 à 70% de calcium et 15 à 25% de fer.

10. Substance selon la revendication 1, caractérisée en ce que les esters d'acides gras sont des esters d'acides gras naturels ayant 7 à 25 atomes de carbone.

11. Substance selon la revendication 1, caractérisée en ce que les esters d'acides gras sont des glycérides.

12. Substance selon la revendication 1, caractérisée en ce que les esters d'acides gras sont des esters de méthyle.

13. Substance selon la revendication 1, caractérisée en ce que les esters d'acides gras sont des esters de méthyle (d'huile) de colza.

14. Substance selon la revendication 1, caractérisée en ce que la teneur totale en esters d'acides gras se situe entre 2 et 10%, de préférence entre 3 et 8% et idéalement entre 4 et 6%, calculée par rapport à la substance additive.

15. Substance selon la revendication 1, caractérisée en ce que les acides gras compris dans la substance sous la forme desdits acides gras et/ou acides de résines sont des acides gras insaturés et/ou saturés ayant 7 à 25 atomes de carbone, dans une teneur de 10 à 95%, de préférence de 20 à 80% et idéalement de 30 à 70%, calculée par rapport à la substance additive.

16. Substance selon la revendication 1, caractérisée en ce que les acides gras sont des acides gras ayant 15 à 22 atomes de carbone, dans une teneur de 5 à 75%, de préférence de 10 à 60% et idéalement de 15 à 50%.

17. Substance selon la revendication 1, caractérisée en ce que lesdits acides gras et/ou acides de résines sont constitués de tallol brut.

18. Substance selon la revendication 15, caractérisée en ce que la teneur en tallol brut se situe entre 30 et 95%, de préférence entre 50 et 95% et idéalement entre 70 et 90%, calculée par rapport à la substance additive.
